# EUROPÄISCHE PATENTANMELDUNG

(11) **EP 4 815 417 A1**
(43) Veröffentlichungstag der Anmeldung: **30.09.2026**
(21) Anmeldenummer: 26166748.9
(22) Anmeldetag: 23.03.2026
(51) Int. Cl.: H04M 11/02

(54) **HAUSKOMMUNIKATIONSENDGERÄT UND HAUSKOMMUNIKATIONSANLAGE**

(30) Priorität: 24.03.2025 DE 102025111276
(71) Anmelder: Horst Siedle GmbH & Co. KG., 78120 Furtwangen (DE)
(72) Erfinder: Nübling, Michael, 79211 Denzlingen (DE); Fehrenbacher, Thomas, 78132 Hornberg (DE)
(74) Vertreter: Isarpatent

(57) **Zusammenfassung**

Die vorliegende Erfindung betrifft ein Hauskommunikationsendgerät für eine Hauskommunikationsanlage, mit einem geschlossenen Gehäuse, mit einer innerhalb des Gehäuses angeordneten Steuereinrichtung, welche dazu ausgebildet ist, das Hauskommunikationsendgerät oder Komponenten davon zu steuern, mit mindestens einem mit der Steuereinrichtung gekoppelten, separaten Temperatursensor, welcher dazu ausgebildet ist, die Temperatur im inneren des Gehäuses zu erfassen, wobei die Steuereinrichtung dazu ausgebildet ist, die erfasste Temperatur auszuwerten und abhängig von der ausgewerteten Temperatur das Hauskommunikationsendgerät und/oder Komponenten davon zu betreiben. Die vorliegende Erfindung betrifft ferner eine Hauskommunikationsanlage mit mindestens einem solchen Hauskommunikationsendgerät.

## Beschreibung

### GEBIET DER ERFINDUNG

Die vorliegende Erfindung betrifft ein Hauskommunikationsendgerät für eine Hauskommunikationsanlage. Die vorliegende Erfindung betrifft ferner eine Hauskommunikationsanlage.

### TECHNISCHER HINTERGRUND

Die vorliegende Erfindung bezieht sich auf das Gebiet der Hauskommunikation als Teil der Hausautomatisierung. Die Hausautomatisierung befindet sich im das Umfeld des intelligenten Wohnens, welches Lösungen im privaten oder geschäftlichen Wohn- und Arbeitsbereich bezeichnet, die auf die speziellen Bedürfnisse der Bewohner von privaten Wohnhäusern, Wohnblocks oder Geschäftshäuser ausgerichtet sind, bei denen Geräte, Systeme und Technologien eingesetzt werden, die mehr Effizienz, Komfort, Wirtschaftlichkeit, Flexibilität und Sicherheit schaffen.

Ein Aspekt der Hausautomatisierung bezieht sich auf die Hauskommunikation mittels entsprechender Hauskommunikationsendgeräte oder (Gegen-)Sprechanlagen. Moderne Hauskommunikationsanlagen umfassen typischerweise eine Vielzahl von verschiedenen Hauskommunikationsendgeräten, die miteinander über ein Verbindungsnetzwerk, wie z.B. ein KNX-Bussystem, gekoppelt sind. Man unterscheidet dabei zwischen so genannten Innenstationen, die in einem geschützten Bereich innerhalb des Hauses oder einer entsprechenden Wohnungseinheit angeordnet sind, und so genannte Türstationen oder Außenstationen, die im öffentlichen Bereich vor oder unmittelbar an der Haus- oder Gebäudetür oder als Etagentüren innerhalb eines Gebäudes angebracht sind und über welche Besucher mit Hausbewohnern in kommunikative Verbindung treten können. Diese Hauskommunikationsendgeräte weisen meist eine Klingel oder ein Klingeltastenfeld, einen Türöffner, eine Gegensprechanlage, eine Kamera und ein Display auf, über welche eine bidirektionale Kommunikation zwischen Besucher und Haus- oder Wohnungsbewohner ermöglicht wird. Derartige Hauskommunikationsanlagen sind allgemein bekannt, so dass darauf nicht näher eingegangen werden muss.

Die vorliegende Erfindung sowie die ihr zugrundeliegende Problematik wird nachfolgend anhand eines als Türstation ausgebildeten Hauskommunikationsendgeräts einer Hauskommunikationsanlage erläutert, ohne die Erfindung darauf zu beschränken. Vielmehr kann die Erfindung auch für eine Innenstation vorteilhaft eingesetzt werden.

Türstationen von Hauskommunikationsanlagen sind aufgrund der Ausrichtung von Gebäudeeingängen oftmals so positioniert, dass sie zumindest für einen Teil des Tages direkter Sonneneinstrahlung ausgesetzt sind. Vor allem in Sommermonaten können sich die Türstationen aufgrund der vergleichsweise hohen Außentemperaturen und längeren Helligkeitsphasen sowie einer höheren Sonneneinstrahlintensität sehr stark aufheizen, zum Teil auf Temperaturen weit über 100° Celsius. Hinzu kommt, dass heutige Türstationen vor allem im Falle von IP-basierten Hauskommunikationsanlagen technisch immer komplexer aufgebaut sind und deren Mikroprozessoren als Teil der Steuerung eine immer größere Rechenleistung aufweisen, die aufgrund der Verlustleistung die Temperatur im Inneren der Türstation zusätzlich erhöht. Gleichzeitig wird an Türstationen aber die Anforderung gestellt, selbst bei den genannten extremen äußeren Bedingungen voll funktionsfähig zu bleiben.

Es ist allgemein bekannt, dass extreme Belastungen sich auf die Lebensdauer von elektrischen und vor allem elektronischen Geräten auswirken können. Bei dauerhaften hohen Temperaturen können elektrische, elektronische und mechanische Komponenten degradieren, was bis hin zum Funktionsausfall führen kann.

Dies ist ein Zustand, den es zu verbessern gilt.

### ZUSAMMENFASSUNG DER ERFINDUNG

Vor diesem Hintergrund besteht die Aufgabe der vorliegenden Erfindung darin, ein im Hinblick auf thermische Belastung verbessertes Hauskommunikationsendgerät anzugeben.

Erfindungsgemäß wird diese Aufgabe durch ein Hauskommunikationsendgerät mit den Merkmalen des Patentanspruchs 1 und/oder durch eine Hauskommunikationsanlage mit den Merkmalen des Patentanspruches 15 gelöst.

Demgemäß ist vorgesehen:
- Ein Hauskommunikationsendgerät für eine Hauskommunikationsanlage, insbesondere Türstation, mit einem geschlossenen Gehäuse, mit einer innerhalb des Gehäuses angeordneten Steuereinrichtung, welche dazu ausgebildet ist, das Hauskommunikationsendgerät oder Komponenten davon zu steuern, mit mindestens einem mit der Steuereinrichtung gekoppelten, separaten Temperatursensor, welcher dazu ausgebildet ist, die Temperatur im Inneren des Gehäuses zu erfassen, wobei die Steuereinrichtung dazu ausgebildet ist, die erfasste Temperatur auszuwerten und abhängig von der ausgewerteten Temperatur das Hauskommunikationsendgerät und/oder Komponenten davon zu betreiben.
- Eine Hauskommunikationsanlage mit mindestens einer Innenstation und mit mindestens einer Türstation, wobei zumindest eine Innenstation und/oder Türstation als erfindungsgemäßes Hauskommunikationsendgerät ausgebildet ist, mit einer Kommunikationsschnittstelle, die dazu ausgebildet ist, das Hauskommunikationsendgerät mit einem externen Server oder einem Master der Hauskommunikationsanlage zu koppeln.

Die der vorliegenden Erfindung zugrunde liegende Erkenntnis besteht darin, dass extreme thermische Umgebungsbedingungen in Kombination mit einer hohen internen Betriebstemperatur sich negativ auf die Lebensdauer von Hauskommunikationsendgeräten auswirken können.

Die der vorliegenden Erfindung zugrunde liegende Idee besteht nun darin, die Temperatur innerhalb eines Hauskommunikationsendgeräts zu erfassen und ferner eine Möglichkeit vorzusehen, das Hauskommunikationsendgerät abhängig von der erfassten Temperatur zu betreiben. Dadurch werden sowohl die äußeren thermischen Einflüsse als auch die internen thermischen Einflüsse, die durch Komponenten des Hauskommunikationsendgeräten bedingt sind, berücksichtigt. Dadurch kann die Lebensdauer von Hauskommunikationsendgeräten verlängert und einem Ausfall dieser entgegengewirkt werden. Zudem können anfallende Montage- und Reparaturkosten minimiert oder verhindert werden.

Im Allgemeinen weisen Mikroprozessoren eine integrierte Temperaturmessung auf. Dieser im Prozessor vorhandene integrierte Temperatursensor dient vornehmlich dem Zweck, speziell die Prozessortemperatur zu messen und im Falle einer gemessenen Überhitzung des Prozessors diesen in seiner Leistung zu reduzieren oder abzuschalten. Im Unterscheid hierzu wird bei der vorliegenden Erfindung speziell ein separater Temperatursensor, also außerhalb der Steuereinrichtung vorgesehener Temperatursensor eingesetzt. Dieser separate Temperatursensor soll speziell die Temperatur dort messen, wo sie relevant ist, nämlich im Inneren des Gehäuses des Hauskommunikationsendgeräts, und zwar in der Nähe von besonders temperatursensitiven Komponenten, wie etwa der Kamera, Lautsprecher oder Leiterplatten. Dadurch ist es möglich sowohl die Temperatur des Hauskommunikationsendgeräts in seiner gesamten Einheit als auch einzelner Komponenten davon zu bestimmen. Vorzugsweise wird der Temperatursensor abseits der wärmeabgebenden Steuereinrichtung platziert, um Wärmeeinflüsse des Mikroprozessors zu vermeiden und somit eine genauere Messung der Temperatur im Inneren des Gehäuses zu ermöglichen. Zudem kann auf diese Weise auch der Temperatureinfluss des Gehäuses bereits sehr frühzeitig berücksichtigt werden, welches im Falle einer als Türstation häufig direkter Sonneneinstrahlung ausgesetzt ist und deshalb eine Quelle für eine Aufheizung ist.

Hinzu kommt, dass durch den Einsatz eines separaten Temperatursensors dieser bei Ausfall sehr einfach ausgetauscht werden kann, ohne dass dafür der gesamte Mikroprozessor ersetzen werden müsste.

Zusätzlich dient die externe Sensorplatzierung als Frühwarnsystem für kritische Temperaturen, wodurch zeitnah reagiert und somit der Mikroprozessor geschützt werden kann. Ein weiterer wichtiger Vorteil besteht darin, dass der Temperatursensor unabhängig vom verwendeten Mikroprozessor ausgewählt werden kann, um speziellen Umgebungsbedingungen oder Temperaturmessbereichen gerecht zu werden. Der flexible Einsatz von Temperatursensoren außerhalb der Steuereinrichtung ermöglicht zudem die Platzierung des Sensors an schwer zugänglichen Stellen.

Im Fall einer Hauskommunikationsanlage, die mindestens eine Innenstation und Türstation aufweist, lassen sich die gemessenen Temperaturwerte der Innen- und Türstation miteinander vergleichen und somit der einwandfreie Zustand der Temperatursensoren verifizieren.

Die Funktion der Innenstation kann auch als Software-App ausgebildet sein. Das bedeutet, dass eine Hauskommunikationsanlage auch zumindest eine Türstation aufweisen kann und dass die Funktion der jeweiligen Innenstationen durch entsprechende Innenstation-Applikationen, die die Wohnungsnutzer auf einem mobilen Endgerät installiert haben, realisiert ist.

Vorteilhafte Ausgestaltungen und Weiterbildungen ergeben sich aus den weiteren Unteransprüchen sowie aus der Beschreibung unter Bezugnahme auf die Figuren der Zeichnung.

In einer vorteilhaften Ausführungsform weist das Hauskommunikationsendgeräte eine Leiterplatte auf, auf der die Steuereinrichtung, der separate zur Steuereinrichtung vorgesehene Temperatursensor sowie elektrische und elektronische Komponenten des Hauskommunikationsendgerätes angeordnet sind. In einer weiteren vorteilhaften Ausführungsform ist der Temperatursensor als IC-Bauteil ausgebildet.

In einer vorteilhaften Ausführungsform ist der Temperatursensor als ein digitaler Temperatursensor ausgebildet, der also das analoge Temperatursignal in ein digitales Signal umwandelt, welches an die Steuereinrichtung weitergeleitet wird. Der digitale Sensor ermöglicht damit eine direkte Verarbeitung der Temperaturinformation durch die Steuereinrichtung. Nach der A/D-Wandlung wird das Temperatursignal somit nicht mehr durch äußere Effekte und Störungen beeinflusst. Digitale Temperatursensoren bieten konsistente Leistung und sind weitgehend unempfindlich gegen Feuchtigkeit und elektromagnetische Störungen, wodurch eine Langzeitstabilität erreicht werden kann. Zudem können sie neben der reinen Temperaturinformation auch noch weitere Informationen übermitteln, wie etwa den Art der Temperaturmessung, Kalibrier- und Justierinformationen. Der Messbereich digitaler Temperatursensoren liegt im Allgemeinen im Bereich zwischen -50 °C bis 150 °C, wodurch sich diese Temperatursensoren besonders gut für den Einsatz in Hauskommunikationsendgeräten auch in extremen thermischen Bedingungen eignen.

Besonders bevorzugt ist es, wenn der Temperatursensor als Smart-Sensor ausgebildet ist, der also die erfasste Temperatur unmittelbar auswertet und eine entsprechend ausgewertete Temperaturinformation an die Steuereinrichtung weiterleitet. Denkbar wäre zum Beispiel, wenn der Smart-Sensor lediglich dann eine Temperaturinformation an die Steuereinrichtung sendet, wenn die erfasste Temperatur eine vorgegebene, zum Beispiel kritischen Schwelle überschreitet. Dies hat den Vorteil, dass die Steuereinrichtung lediglich dann in Anspruch genommen wird, wenn zum Beispiel eine kritische Temperaturinformation vorliegt, wodurch die Steuereinrichtung effizienter arbeiten kann.

Vorzugsweise ist mindestens ein Temperatursensor dazu ausgebildet, neben der Temperatur im Gehäuseinnenraum zusätzlich die Temperatur von temperaturrelevanten Bestandteilen des Hauskommunikationsendgeräts zu erfassen. Beispielsweise kann die Temperatur direkt an der Kamera und damit am temperaturempfindlichsten Bauteil erfassen. Zusätzlich wäre auch denkbar, wenn der Temperatursensor zum Beispiel über einen Messfühler die Temperatur am Gehäuse erfasst, beispielsweise um frühzeitig eine Aufheizung des Gehäuses und damit des Hauskommunikationsendgeräts zum Beispiel durch externe Einflüsse zu erfassen. Auch eine Messung der Temperatur am Lautsprecher, dem beleuchteten Tastenfeld und/oder von elektronischen Komponenten ist möglich. Die Temperaturmessung an unterschiedlichen Stellen ermöglicht zum einen die Korrelation der gemessen Werte und damit eine genauere Messung sowie zum anderen eine Temperaturüberwachung des Hauskommunikationsendgeräts in seiner gesamten Einheit und einzelner Komponenten davon unabhängig voneinander, wodurch auf Temperaturänderungen jeder Komponente individuell und schnell reagiert werden kann. Zusätzlich wäre in einer weiteren Ausführungsform auch denkbar, wenn zusätzlich die Außentemperatur des Hauskommunikationsendgeräts erfasst wird. Insbesondere bei Innenstationen bietet dies den Vorteil, die Raumtemperatur zu messen und einem Nutzer anzuzeigen.

In einer vorteilhaften Ausführungsform ist die Steuereinrichtung als ein Mikrocontroller oder Mikroprozessor ausgebildet. Ein Mikroprozessor ist ein integrierter Schaltkreis (IC), der aufgrund der Verkleinerung und Integration seiner Schaltungsbestandteile auf einem Halbleitermaterial untergebracht werden kann. Ein Mikroprozessor ist eine programmgesteuerte Einrichtung, der entsprechend der in seinem Speicher enthaltenen Programm-Codes meist digital vorliegende Informationen auswertet und verarbeitet. In der Regel steuert der Mikroprozessor andere elektrische und elektronische entsprechend der Vorgaben seines Programms.

In einer vorteilhaften Ausführungsform ist die Steuereinrichtung dazu ausgebildet, das Hauskommunikationsendgerät und/oder Komponenten davon in zumindest drei Betriebsmodi zu betreiben. Ein erster Betriebsmodus bezeichnet einen Normalbetrieb, ein zweiter Betriebsmodus bezeichnet einen Funktions-reduzierten Betrieb, und ein dritter Betriebsmodus bezeichnet einen Abschaltbetrieb. Im Normalbetrieb wird das Hauskommunikationsendgerät, wie der Name bereits suggeriert, entsprechend seiner Konfiguration ohne weitere Einschränkungen betrieben, wobei der Normalbetrieb auch einen Energiesparmodus beinhalten kann. Im funktionsreduzierten Betrieb können die Steuereinrichtung und/oder Komponenten des Hauskommunikationsendgeräts in ihrer Funktion reduziert betrieben werden. Zusätzlich können im Funktions-reduzierten Betrieb die Steuereinrichtung und/oder Komponenten auch in einen funktionsreduzierten Betrieb gefahren werden. Beim Abschaltbetrieb werden alle Komponenten des Hauskommunikationsendgeräts abgeschaltet und die Steuereinrichtung wird in einen funktionsreduzierten Betrieb gesetzt. Dadurch wird rechtzeitig vermieden, dass temperatursensitive Komponenten, wie Kamera, Kunststoffe, Dichtungen, Mikrofonmembranen und dergleichen Schaden nehmen.

In einer vorteilhaften Ausführungsform ist die Steuereinrichtung dazu ausgebildet, die unterschiedlichen Betriebsmodi abhängig von in der Steuereinrichtung hinterlegten Temperaturschwellwerten einzustellen. Ein erster Temperaturschwellwert bezeichnet dabei einen Übergang zwischen Normalbetrieb und Funktions-reduziertem Betrieb. Ein zweiter Temperaturschwellwert bezeichnet einen Übergang zwischen Funktions-reduziertem Betrieb und Abschaltbetrieb. Dabei können die Temperaturschwellwerte derart definiert sein, dass Temperatursensitive Komponenten effizient geschützt werden. Beispielsweise ist der erste Betriebsmodus für den Temperaturbereich kleiner 60 °C vorgesehen, der zweite Betriebsmodus ist für den Temperaturbereich von 60 °C bis 85 °C und der dritte Betriebsmodus für den Temperaturbereich größer 85 °C vorgesehen.

In einer vorteilhaften Ausführungsform ist die Steuereinrichtung dazu ausgebildet, im zweiten und dritten Betriebsmodus insbesondere solche Komponenten in ihrer Funktion zu reduzieren oder abzuschalten, die eine hohe Verlustleistung aufweisen und/oder für die Grundfunktion des Hauskommunikationsendgeräts weniger relevant sind. Dazu zählen beispielsweise das Tastenfeld, dessen Hintergrundbeleuchtung gedimmt werden kann, das Display, dessen Helligkeit gedimmt werden kann und/oder mit geringerer Displayauflösung betrieben werden kann, und/oder die Steuereinrichtung, die zum Beispiel mit geringerer Taktrate betrieben werden kann.

In einer vorteilhaften Ausführungsform bezeichnet der Funktions-reduzierte Betrieb eine Reduzierung der Leistungsaufnahme der entsprechenden Komponente oder der Steuereinrichtung und/oder eine Reduzierung der Taktrate der Steuereinrichtung. Dadurch ist es möglich, je nach bedarfsgemäß entweder die Rechengeschwindigkeit des Hauskommunikationsendgeräts zu reduzieren und/oder den Funktionsumfang des Hauskommunikationsendgeräts zu senken.

Das Hauskommunikationsendgerät weist vorzugsweise eine Kamera auf. In einer vorteilhaften Ausführungsform ist die Steuereinrichtung dazu ausgebildet, im zweiten Betriebsmodus die Frame-Rate und/oder die Auflösung der Kamera zu reduzieren. Die Erkenntnis der Erfindung besteht darin, dass Frame-Rate und/oder die Auflösung der Kamera besonders rechenintensiv sind und damit die Steuereinrichtung besonders in Anspruch nehmen. Durch die genannte Maßnahme wird die Rechenleistung der Steuereinrichtung signifikant reduziert, wodurch sich die Temperatur im Inneren des Hauskommunikationsendgeräts effizient reduzieren lässt.

In einer weiteren Ausführungsform ist eine mit der Steuereinrichtung und/oder dem Temperatursensor gekoppelte Alarmeinrichtung vorgesehen. Die Alarmeinrichtung gibt im Fall des zweiten oder dritten Betriebsmodus eine Alarmmeldung aus. Dabei kann die Alarmmeldung optisch, beispielsweise durch das Aufleuchten oder Blinken einer LED erfolgen. Zusätzlich oder alternativ kann die Alarmmeldung auch akustisch ausgegeben werden, beispielsweise durch ein entsprechendes Warnsignal. Alternativ kann die Alarmeinrichtung auch ein Alarmsignal an einen Master der Hauskommunikationsanlage senden.

In einer vorteilhaften Ausführungsform weist das Hauskommunikationsendgerät eine Kommunikationsschnittstelle auf, die dazu ausgebildet ist, das Hauskommunikationsendgerät mit einem externen Server und/oder einem Master der Hauskommunikationsanlage zu koppeln. Dadurch kann das Hauskommunikationsendgerät auch durch eine externe Steuereinrichtung gesteuert werden. Vor allem bei IP-basierten Hauskommunikationsanlagen lässt sich auf diese Weise ein Datenaustausch zwischen dem Hauskommunikationsendgerät und anderen Hauskommunikationsendgeräten und/oder einem Server der Hauskommunikationsanlage herstellen.

In einer vorteilhaften Ausführungsform ist das Gehäuse des Hauskommunikationsendgerätes als ein stabiles, massives und vorzugsweise nach außen hin abgedichtetes Gehäuse ausgebildet. Dadurch wird das Einwirken von äußeren Einflüsse, wie Kälte, Feinstaub, Nässe und Feuchtigkeit, möglichst geringgehalten. Die massive Ausgestaltung des bietet eine verbesserte Vandalismus-Sicherheit, was insbesondere für als Türstationen ausgebildete Hauskommunikationsendgeräte vorteilhaft ist. Des Weiteren weist das Gehäuse eine Befestigungsschnittstelle auf, um das Hauskommunikationsendgerät an einer Gebäudewand oder Tür zu befestigen. Bei Innenstationen wird zusätzlich ein möglichst platzsparendes Hauskommunikationsendgerät bevorzugt. Für Türaußenstationen werden am häufigsten Edelstahl und Aluminium verwendet, da sie eine optimale Kombination aus Haltbarkeit, Witterungsbeständigkeit und ansprechender Ästhetik bieten.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild zur Erläuterung eines erfindungsgemäßen Hauskommunikationsendgeräts;
- Fig. 2: ein Ausführungsbeispiel eines als Außenstation ausgebildeten erfindungsgemäßen Hauskommunikationsendgeräts;
- Fig. 2a: eine Seitenansicht der Außenstation gemäß Fig. 2;
- Fig. 2b: eine Explosionsdarstellung der Außenstation gemäß Fig. 2;
- Fig. 3: ein Blockschaltbild einer erfindungsgemäßen Hauskommunikationsanlage.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

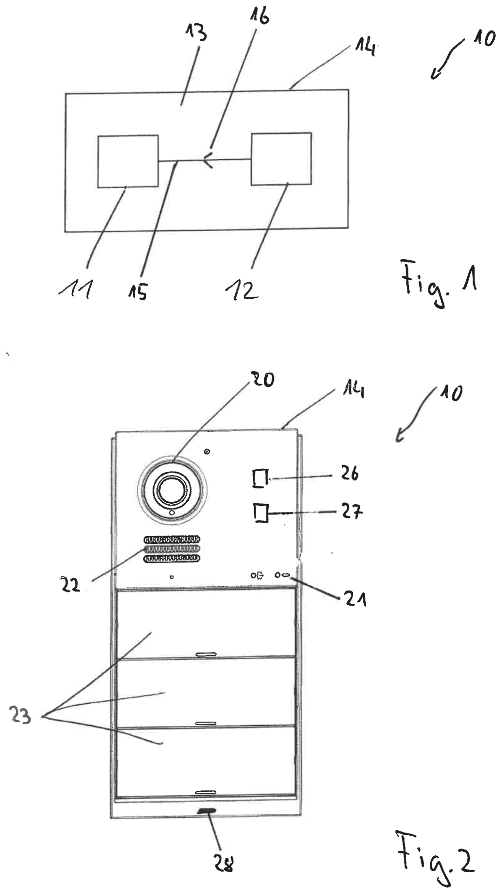

Fig. 1 zeigt ein Blockschaltbild eines erfindungsgemäßen Hauskommunikationsendgeräts.

In Fig. 1 ist mit Bezugszeichen 10 das Hauskommunikationsendgerät bezeichnet. Im gezeigten Beispiel ist das Hauskommunikationsendgerät 10 als Türstation oder Außenstation einer Hauskommunikationsanlage ausgebildet, jedoch kann das Hauskommunikationsendgerät 10 auch als Innenstation ausgebildet sein.

Das Hauskommunikationsendgerät 10 weist eine Steuereinrichtung 11 sowie zumindest einen Temperatursensor 12 auf, die beide im Inneren 13 des Gehäuse 14 des Hauskommunikationsendgerät 10 angeordnet sind. Das Hauskommunikationsendgerät 10 weist typischerweise noch weitere elektrische, elektronische und mechanische Komponenten auf, die in Fig. 1 aber nicht gezeigt sind.

Die Steuereinrichtung 11 ist zum Beispiel als Mikroprozessor oder Mikrocontroller ausgebildet und dient dem Zweck, die Funktion des Hauskommunikationsendgeräts 10 und dessen Komponenten zu steuern.

Der Temperatursensor 12 ist separat zur Steuereinrichtung 11 vorgesehen und mit dieser über eine Verbindung 15 gekoppelt. Der Temperatursensor 12 ist dazu ausgebildet, die Temperatur im Inneren 13 des Gehäuses 14 zu erfassen. Die so erfassten Temperaturinformationen 16 werden der Steuereinrichtung 11 übermittelt, die die erfasste Temperatur auswertet und das Hauskommunikationsendgerät 10 und/oder Komponenten davon abhängig von der ausgewerteten Temperatur betreibt.

Die Verbindung 15 kann kabelgebunden durch einen 1-Draht-Bus, 2-Draht-Bus I²C, oder SPI erfolgen. Alternativ kann es sich auch um eine drahtlose Verbindung 15 handeln, wie beispielsweise Bluetooth Low Energy (BLE) oder Wi-Fi, insbesondere geeignet für IoT-Anwendungen in Smart Homes, UART oder andere Bussysteme ergänzen. Die Wahl der Verbindungsmethode hängt von den spezifischen Anforderungen des Hauskommunikationsendgeräts ab, wie Reichweite, Stromverbrauch, Datenrate und Integrationsaufwand. Kabelgebundene Lösungen bieten oft zuverlässigere Verbindungen, während drahtlose Optionen mehr Flexibilität bei der Installation ermöglichen.

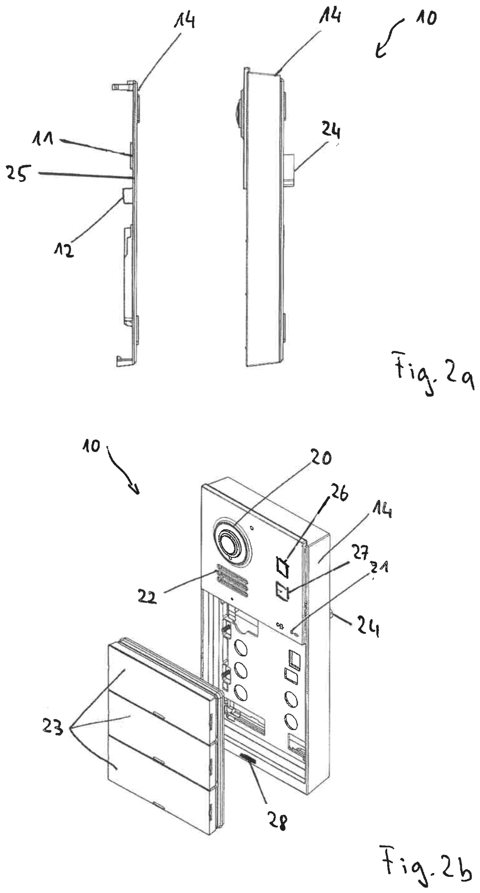

Fig. 2 zeigt ein Ausführungsbeispiel eines als Außenstation ausgebildeten erfindungsgemäßen Hauskommunikationsendgeräts.
Fig. 2a zeigt dabei eine Seitenansicht und Fig. 2b eine Explosionsdarstellung.

Das erfindungsgemäße Hauskommunikationsendgerät 10 beinhaltet neben der Steuereinrichtung 11 und dem Temperatursensor 12 noch eine Kamera 20, ein Lautsprecher 22, Status-LEDs 21, ein Mikrofon 28, eine Tastatur 23, eine Montagevorrichtung 24, eine Leiterplatte 25, eine Alarmeinrichtung 26 sowie eine Versorgungs- und Kommunikationsschnittstelle 27.
und die Tastatur ist hier als ein modulares Tastenfeld 23 ausgebildet. Alternativ zum modularen Tastenfeld 23 kann das Hauskommunikationsendgerät 10 auch einen Touchscreen als Benutzer-Interface aufweisen, auf dem Klingeltasten und diverse weitere Zusatzinformationen angezeigt werden. Dies bietet eine flexible und moderne Lösung, besonders für größere Wohnanlagen. Zusätzlich zum Tastenfeld kann auch ein RFID-Kartenleser installiert werden, um ein automatisches Öffnen der Tür bei entsprechender Berechtigung zu ermöglichen. Für Einfamilienhäuser könnte bedarfsweise auch ein einfaches Kameramodul mit einem einzelnen Klingelknopf ausreichend sein. Moderne Türstationen können Fingerabdruck- oder Gesichtserkennung anbieten. Diese Alternativen bieten verschiedene Vorteile in Bezug auf Benutzerfreundlichkeit, Sicherheit und Flexibilität. Die Wahl hängt von den spezifischen Anforderungen des Gebäudes und/oder der Bewohner ab.

Ferner ist eine Alarmeinrichtung 26 vorgesehen, die dazu ausgelegt ist, die mit der Steuereinrichtung 11 und dem Temperatursensor 12 gekoppelt ist (hier nicht dargestellt) und die im Falle einer gemesseneren Übertemperatur eine Alarmmeldung auszugeben, beispielsweise optisch oder akustisch.

Das Hauskommunikationsendgerät 10 weist ferner eine versorgungs- und Kommunikationsschnittstelle 27 aufweist, die dazu ausgebildet ist, das Hauskommunikationsendgerät 10 mit Strom zu versorgen und zur Kommunikation mit einem externen Server und/oder einem Master der Hauskommunikationsanlage 30 zu koppeln (hier nicht gezeigt).

Fig. 2a zeigt eine schematische Seitenansicht der Ausführungsform gemäß Fig. 2, wobei das Gehäuse 14 des Hauskommunikationsendgeräts 10 in der linken Darstellung einzeln und in der rechten Darstellung nach dem Zusammenbau dargestellt ist. Ferner ist der Temperatursensor 12 sowie die Steuereinrichtung 11 innerhalb des Gehäuses 14 auf einer Leiterplatte 25 montiert. Ferner ist eine Montagevorrichtung 24 vorgesehen, über welche das Hauskommunikationsendgerät 10 an einer Gebäudewand, an einer Haustür oder einem separaten Gebäudeelement befestigt werden kann.

Fig. 2b zeigt eine Explosionsdarstellung des Hauskommunikationsendgeräts 10 gemäß Fig. 2. Dabei bietet eine als modulares Tastenfeld ausgebildete Tastatur 23 ein flexibles Eingabesystem, das aus einzelnen, austauschbaren Komponenten besteht und nach Bedarf angepasst oder erweitert werden kann. Die Anordnung und Bestückung des Tastenfelds 23 kann je nach Anforderungen des Gebäudes oder der Bewohner verändert werden. Dabei können verschiedene Arten von Eingabeelementen kombiniert werden, z.B. Klingeltasten, Nummernfelder für PIN-Eingabe oder RFID-Leser für drahtlose Türöffnung. Die Tasten sind oft hintergrundbeleuchtet, was die Bedienung in der Dunkelheit erleichtert.

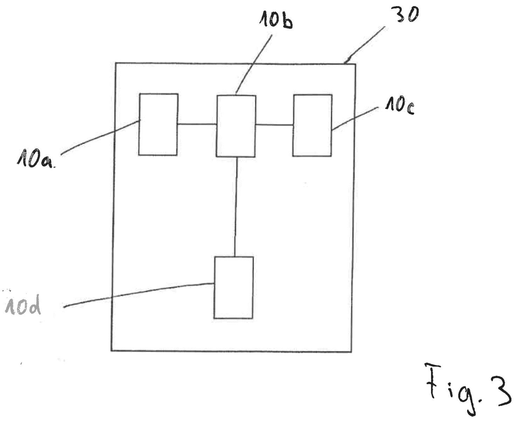

Fig. 3 zeigt ein Blockschaltbild einer erfindungsgemäßen Hauskommunikationsanlage.

Die Hauskommunikationsanlage 30 ist hier als IP-basierte Hauskommunikationsanlage ausgebildet. Die Hauskommunikationsanlage 30 weist eine Vielzahl von Hauskommunikationsendgeräten 10a, 10b, 10c in der Form einer Innenstation auf, die sowohl untereinander als auch mit einem erfindungsgemäßen Hauskommunikationsendgerät 10d in der Form einer Türstation verbunden sind. Dabei kann die Verbindung entweder drahtgebunden oder drahtlos erfolgen. Ein häufig verwendetes System ist das 2-Draht-Bus-System, beispielsweise ein MOST-Bus, eine Feldbus oder dergleichen. Hierbei werden alle Komponenten über ein zweiadriges Kabel miteinander verbunden.

Moderne Hauskommunikationsanlagen 30 nutzen oft IP-Technologie, wobei alle Hauskommunikationsendgerät eine eindeutige IP-Adresse im Netzwerk erhalten und die Kommunikation digital über das IP-Netzwerk erfolgt. Einige Systeme bieten die Möglichkeit, Hauskommunikationsendgeräte drahtlos per WLAN miteinander zu verbinden. Diese Lösung bietet Flexibilität bei der Platzierung der Innenstationen und ermöglicht die einfache Integration von mobilen Geräten. Unabhängig vom gewählten System ermöglichen moderne Hauskommunikationsanlagen in der Regel interne Kommunikation zwischen den Innenstationen, Steuerung des Türöffners, Videoübertragung von der Türstation zu den Innenstationen und Erweiterbarkeit durch zusätzliche Komponenten wie RFID-Leser oder Kameras. Die Wahl des Systems hängt von den spezifischen Anforderungen, der vorhandenen Infrastruktur, dem gewünschten Funktionsumfang sowie den Benutzerwünschen ab.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 10: Hauskommunikationsendgerät, Türstation
- 10a-10c: Hauskommunikationsendgerät, Innenstationen
- 10d: Hauskommunikationsendgerät, Türstation
- 11: Steuereinrichtung
- 12: Temperatursensor
- 13: Gehäuseinneres
- 14: Gehäuse
- 15: Verbindung
- 16: Temperaturinformation

- 20: Kamera
- 21: Status-LEDs
- 22: Lautsprecher
- 23: Tastatur, modulares Tastenfeld
- 24: Montagevorrichtung
- 25: Leiterplatte
- 26: Alarmeinrichtung
- 27: (Kommunikation-)Schnittstelle
- 28: Mikrofon

- 30: Hauskommunikationsanlage

## Patentansprüche

1. Hauskommunikationsendgerät (10) für eine Hauskommunikationsanlage (30), insbesondere Türstation,
mit einem geschlossenen Gehäuse (14),
mit einer innerhalb des Gehäuses (14) angeordneten Steuereinrichtung (11), welche dazu ausgebildet ist, das Hauskommunikationsendgerät (10) oder Komponenten davon zu steuern,
mit mindestens einem mit der Steuereinrichtung (11) gekoppelten, separaten Temperatursensor (12), welcher dazu ausgebildet ist, die Temperatur im Inneren (13) des Gehäuses (14) zu erfassen,
wobei die Steuereinrichtung (11) dazu ausgebildet ist, die erfasste Temperatur auszuwerten und abhängig von der ausgewerteten Temperatur das Hauskommunikationsendgerät (10) und/oder Komponenten davon zu betreiben.

2. Hauskommunikationsendgerät nach Anspruch 1,
**dadurch gekennzeichnet,**
**dass** eine Leiterplatte (25) vorgesehen ist, auf der die Steuereinrichtung (11), der separate Temperatursensor (12) sowie elektrische und elektronische Komponenten des Hauskommunikationsendgerätes (10) angeordnet sind.

3. Hauskommunikationsendgerät nach einem der vorstehenden Ansprüche,
**dadurch gekennzeichnet,**
**dass** der Temperatursensor (12) als IC-Bauteil ausgebildet ist.

4. Hauskommunikationsendgerät nach einem der vorstehenden Ansprüche,
**dadurch gekennzeichnet,**
**dass** der Temperatursensor (12) als ein digitaler Temperatursensor ausgebildet ist.

5. Hauskommunikationsendgerät nach einem der vorstehenden Ansprüche,
**dadurch gekennzeichnet,**
**dass** der Temperatursensor (12) als Smart-Sensor ausgebildet ist.

6. Hauskommunikationsendgerät nach einem der vorstehenden Ansprüche,
**dadurch gekennzeichnet,**
**dass** mindestens ein Temperatursensor (12) dazu ausgebildet ist, neben der Temperatur im Gehäuseinnenraum (13) zusätzlich die Temperatur von temperaturrelevanten Bestandteilen des Hauskommunikationsendgeräts (10), wie etwa des Gehäuses (14) und/oder einer Kamera und/oder eines Lautsprechers und/oder von elektronischen Komponenten, zu erfassen.

7. Hauskommunikationsendgerät nach einem der vorstehenden Ansprüche,
**dadurch gekennzeichnet,**
**dass** die Steuereinrichtung (11) als Mikrocontroller oder Mikroprozessor ausgebildet ist.

8. Hauskommunikationsendgerät nach einem der vorstehenden Ansprüche,
**dadurch gekennzeichnet,**
**dass** die Steuereinrichtung (11) dazu ausgebildet ist, das Hauskommunikationsendgerät und/oder Komponenten davon in zumindest drei Betriebsmodi zu betreiben, wobei ein erster Betriebsmodus einen Normalbetrieb bezeichnet, wobei ein zweiter Betriebsmodus einen Funktions-reduzierten Betrieb bezeichnet, und wobei ein dritter Betriebsmodus einen Abschaltbetrieb bezeichnet.

9. Hauskommunikationsendgerät nach Anspruch 8,
**dadurch gekennzeichnet,**
**dass** die Steuereinrichtung (11) dazu ausgebildet ist, die unterschiedlichen Betriebsmodi abhängig von in der Steuereinrichtung hinterlegten Temperaturschwellwerten einzustellen, wobei ein erster Temperaturschwellwert einen Übergang zwischen Normalbetrieb und Funktions-reduziertem Betrieb bezeichnet und ein zweiter Temperaturschwellwert einen Übergang zwischen Funktions-reduziertem Betrieb und Abschaltbetrieb bezeichnet.

10. Hauskommunikationsendgerät nach einem der Ansprüche 8 oder 9,
**dadurch gekennzeichnet,**
**dass** die Steuereinrichtung (11) dazu ausgebildet ist, im zweiten und dritten Betriebsmodus solche Komponenten in ihrer Funktion zu reduzieren bzw. abzuschalten, die eine hohe Verlustleistung aufweisen und/oder für die Grundfunktion des Hauskommunikationsendgeräts (10) weniger relevant sind.

11. Hauskommunikationsendgerät nach einem der Ansprüche 8 bis 10,
**dadurch gekennzeichnet,**
**dass** der zweite Betriebsmodus eine Reduzierung der Leistungsaufnahme der entsprechenden Komponente oder der Steuereinrichtung (11) und/oder die eine Reduzierung der Taktrate der Steuereinrichtung (11) bezeichnet.

12. Hauskommunikationsendgerät nach einem der Ansprüche 8 bis 11,
**dadurch gekennzeichnet,**
**dass** das Hauskommunikationsendgerät (10) eine Kamera (20) aufweist und dass die Steuereinrichtung (11) dazu ausgebildet ist, im zweiten Betriebsmodus die Frame-Rate und/oder die Auflösung der Kamera (20) zu reduzieren.

13. Hauskommunikationsendgerät nach einem der vorstehenden Ansprüche,
**dadurch gekennzeichnet,**
**dass** eine mit der Steuereinrichtung (11) und/oder dem Temperatursensor (12) gekoppelte Alarmeinrichtung (26) vorgesehen ist, welche im Fall des zweiten und/oder dritten Betriebsmodus eine Alarmmeldung ausgibt.

14. Hauskommunikationsendgerät nach einem der vorstehenden Ansprüche,
**dadurch gekennzeichnet,**
**dass** das Hauskommunikationsendgerät (10) eine Kommunikationsschnittstelle (27) aufweist, die dazu ausgebildet ist, das Hauskommunikationsendgerät (10) mit einem externen Server und/oder einem Master der Hauskommunikationsanlage (30) zu koppeln.

15. Hauskommunikationsanlage (30), mit mindestens einer Innenstation (10a, 10b, 10c) und mit mindestens einer Türstation (10d), wobei zumindest eine Innenstation (10a, 10b, 10c) und/oder Türstation (10d) als Hauskommunikationsendgerät (10) nach einem der vorherigen Ansprüche ausgebildet ist.
